Europäisches Patentamt

European Patent Office

Office européen des brevets

(19)

(11) Publication number: **0 190 800 B1**

(12) # EUROPEAN PATENT SPECIFICATION

(45) Date of publication of patent specification: **17.06.92**  (51) Int. Cl.⁵: **B64D 1/00**

(21) Application number: **86200143.5**

(22) Date of filing: **03.02.86**

(54) **Arrangements for dispensing chaff or the like.**

(30) Priority: **04.02.85 SE 8500486**

(43) Date of publication of application:
**13.08.86 Bulletin 86/33**

(45) Publication of the grant of the patent:
**17.06.92 Bulletin 92/25**

(84) Designated Contracting States:
**DE FR GB IT SE**

(56) References cited:
**EP-A- 0 067 731
EP-A- 0 067 733
EP-A- 0 072 261
EP-A- 0 149 380
GB-A- 2 133 864**

(73) Proprietor: **NobelTech Systems Aktiebolag**

**S-175 88 Järfälla(SE)**

(72) Inventor: **Wrana, Josef Bele Volmar
c/o INT. OCTROOIBUREAU B.V. Prof. Holst-
laan 6
NL-5656 AA Eindhoven(NL)**

(74) Representative: **Falk, Bengt
Swedish Ordnance Patents and Trademarks
S-691 80 Karlskoga(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention refers to a dispenser containing cassettes for launching counter means, preferably intended for arrangement on the underside of an airplane wing, comprising a fixedly mounted dispenser body with a space adapted to accommodate a number of detachable dispensing cassettes loaded with counter means, the cassettes being detachably mounted in the dispenser and locked to the dispenser by means of locking means, and an electronic firing control unit for supplying firing signals to means for dispensing said counter means, said cassettes containing containers accommodating counter means of the cassettes and being provided with first means for cooperation with guide means of the dispenser for guiding a cassette in the final stage of its insertion into the adapted space and ensuring a correct dispensing position of the same and electrical coupling between igniters for the containers and the electronic firing control unit. The invention also refers to a dispensing cassette containing cartridges accomodating counter means adapted to be used together with the dispenser, the cartridges being kept in position by the cassette, the cassette being provided with first means for cooperation with guide means of a respective cell and second means for cooperation with locking means. The counter means may be a radiation reflecting material, such as for example foil strips or metal coated fibers, but may also be flares or other active counter means.

Such a dispenser and a dispensing cassette are disclosed in European patent application EP-A-0 067 733. When loading the dispenser a cassette or a module is put in position below a dispenser rod and pressed upwards towards the dispenser rod. Then the cassette is displaced laterally and finally locked by a rotation movement of a handle on the cassette. Electrical contact between the dispenser and the containers is established by means of a connector common to all the containers when the cassette is displaced laterally.

It is an object of the invention to provide a dispenser which is easy to load and has a short reload time.

Another object of the invention is to obtain a dispenser admitting the use of counter means cassettes easily stored and transported.

According to the invention the dispenser is characterized in that the space adapted to accommodate the dispensing cassettes is devided into a number of cells separated by partition walls, each cell defining an opening for insertion and removal of the cassettes, a cassette when inserted being quided by the partition walls to the final stage of its insertion, the locking means are activated by the movement of the cassette inwards during said final stage of insertion to lock the cassette to the dispenser, the containers of the cassette are cartridges kept in position by the cassette and having bottoms provided with electrical contact surfaces electrically connected to igniters of the cartridges, each cartridge bottom contact surface being directly coupled to electrical coupling means in the dispenser connecting the electronic firing control unit with the contact surface of the cartridge bottom.

The loading of the dispenser is very simple. When the cassette reaches the opening of a cell, the only measure of an operator is to push the cassette inwards. The cassette is guided to its final loaded position by the partition walls of the cells and guide means of the dispenser. Locking means activated by the movement inwards of the cassette lock the cassette in its loaded position. The cartridges are directly electrically connected to the dispenser.

According to a preferred embodiment of the dispenser, the cells of the dispenser are inclined and have a launching direction obliquely downwards and backwards relative to the flight direction of the airplane on which the dispenser is mounted. The inclined direction is advantageous when loading the dispenser. As soon as the cassette reaches the cell opening, the cassette does not need to be lifted in an upright direction against the influence of the gravity force, but may slide along the inner side of the cell in the inclined direction. This makes the insertion of the cassette less laborious. The stated launching direction furthermore contributes to a safe launching and a strong effect of the counter means.

The dispensing cassette according to the invention intended to be used together with the dispenser is characterized in that the cartridges are provided with contact surfaces in the bottom for electrical connection of each contact surface in the cassette to electrical coupling means in the dispenser, the cartridges being kept in position by a cartridge retainer included in the dispensing cassette keeping the bottoms of the cartridges uncovered and in an essentially common plane. The arrangement of the cartridges enables a direct electrical coupling between the dispenser and each individual cartridge. By means of the arrangement of cartridges holding counter means in a cassette, a dispenser cassette is also obtained which is easy to handle and there is no need for storing boxes or the like when the cassettes are stored or transported from the storage room to the airplane. While awaiting use the cassettes may be stored piled on each other in an appropriate storage room. When the cassettes are to be used they can be transported to the dispenser piled on each other. The cassette in combination with the cartridges also provides a good protection against mechanical damage of the counter means, which is of great importance for the dispenser operation. The cassette may according to prefered embodiments be provided with a porous filling material or a homogeneous plastic, providing shock absorption and fixing the cartridges to the retainer.

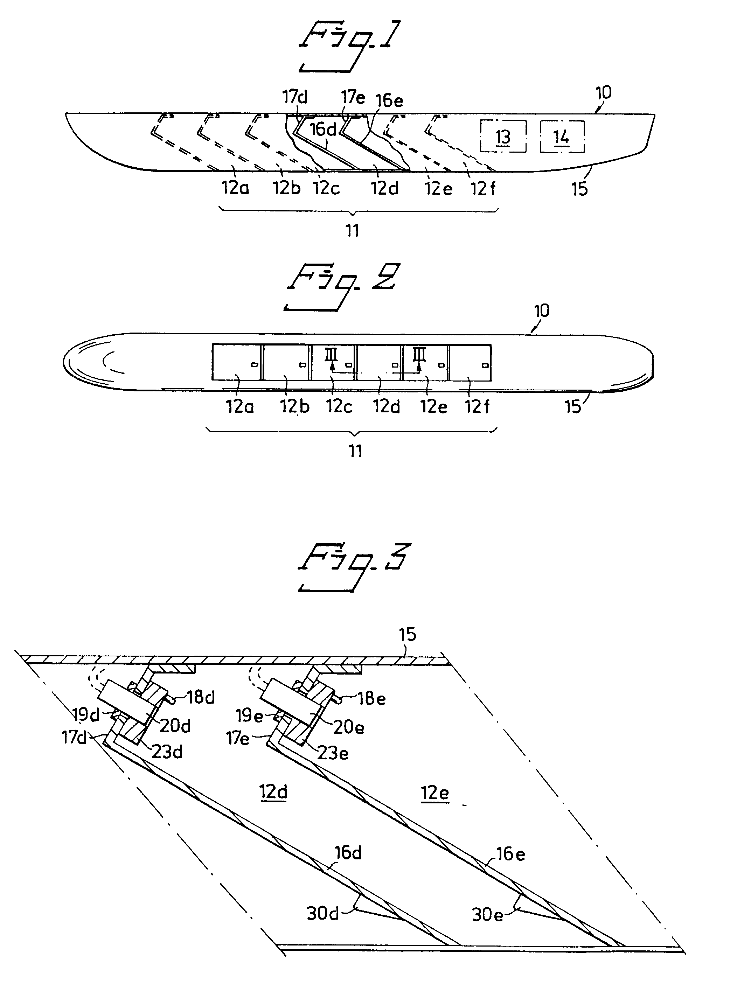

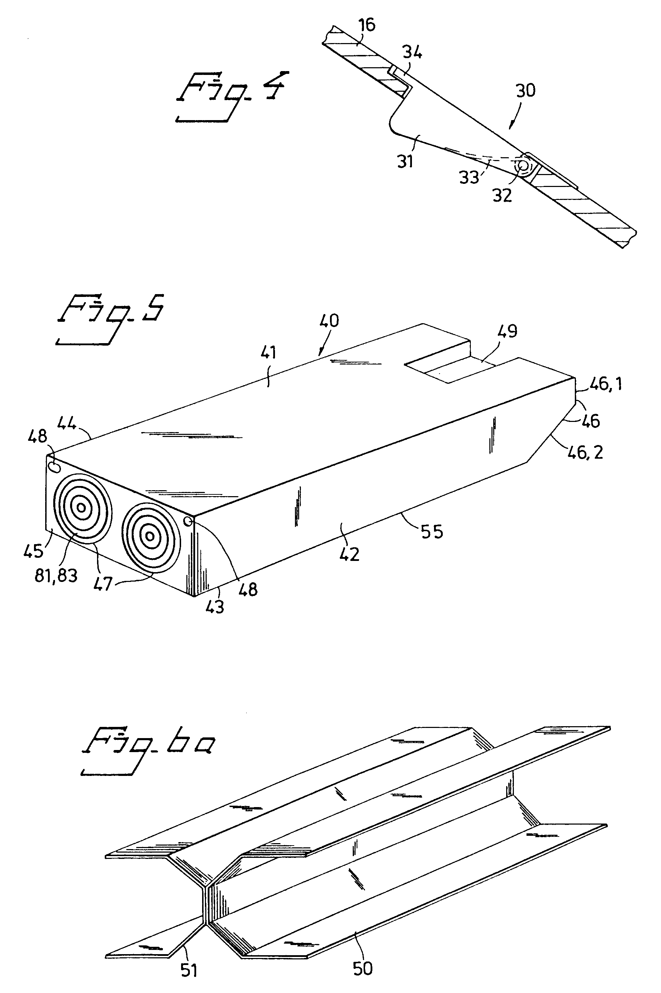

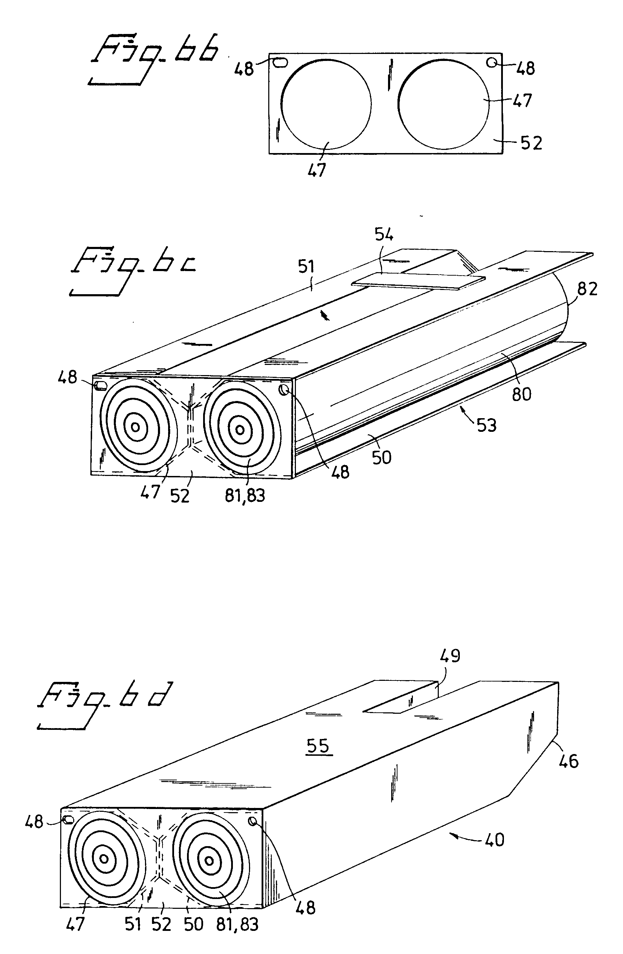

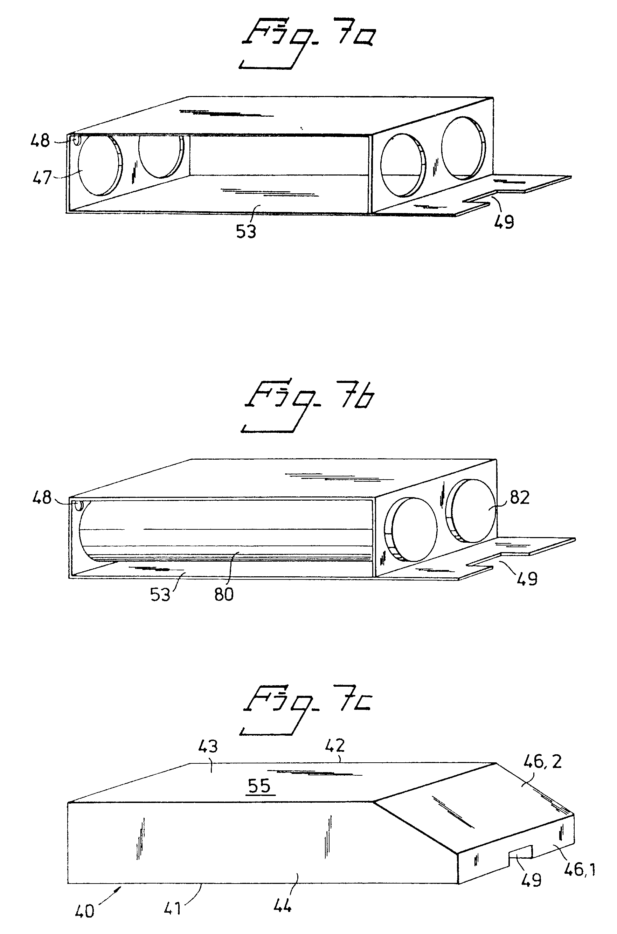

The invention will be described in more detail below with reference to the accompanying drawings, in which figure 1 shows a side view of a dispenser according to the invention, figure 2 shows a bottom view of the dispenser, figure 3 shows a section according to figure 2 of a part of the dispenser, figure 4 shows locking means of the dispenser according to the invention, figure 5 shows a general embodiment of a dispensing cassette intended for the dispenser, figure 6 a-b shows four steps during the production of a dispensing cassette according to a first embodiment, and figure 7 a-c shows three steps during the production of a dispensing cassette according to a second embodiment.

The figure 1 shows the dispenser in a side view, the envelope being removed within an indicated area accomodating two cells for cassettes, the rest of the cells being indicated by means of dashed lines.

The dispenser 10 shown in the figures 1-3 comprises a magazine 11 and a number of cells 12 a-f, an electronic firing control unit 13, and a power supply unit 14, all comprised elements being accomodated in an envelope 15. In the following description the letter (a, b, c, d, e) in a reference number (for example 30d) means that the detail referred to relates to a specific cell, while the reference number without a letter (for example 30) means a reference to a detail in an arbitrary cell. The cells 12 a-f of the magazine 11 are, as is most apparent from the figure 3, shaped by means of inclined discs 16 a-f, preferably of metal. Each of the discs 16 are provided with a transversely arranged plate 17 fastened at least at the upper part of the magazine and accordingly at the upper part of the envelope 15. The transversely arranges plate 17, which suitably is bent at the top, in the shown way is provided with guide means 18 for mechanical cooperation with a dispensing cassette and coupling means 20 for electrical coupling of cartridges contained in the cassette to the electronic unit. The guide means 18 are shown as guide pins projecting from the transversely arranged plate and intended to cooperate with recesses in an inserted cassette. Coupling means 20 are arranged for each cartridge 80 contained in a cassette and each coupling means 20 contain spring-loaded pins, not shown, which are arranged to be loaded against a contact plate 83 arranged in each cartridge bottom, see figure 6c. The contact plate 83 may, for example, consist of a number of concentric contact rings separated by insulating regions. Such a contact plate is shown in more detail and described in our SE patent specification 7414669-7 (386 735). The coupling means 20 are fastened in the transversely arranged plate 17 by means of a holding ring 19 and on the cassette side surrounded by a shock absorbing spacer 23. In the open end of the cells 12 a-f locking means 30 a-f are arranged. The locking means 30 consist of, see figure 4, a tapering arm 30 rotatable around a shaft 32 located in the tapered end of the arm and spring loaded by means of a spring element 33 arranged around the shaft 32. In the wide end of the arm a stop element is arranged in the prolongation of the arm.

In the figure 5 a general embodiment of a dispensing cassette 40 having two cartridges and intended to be used together with the dispenser as described above is shown. The cassette is defined by four rectangular side surfaces 41-44 and a first and a second end surface 45, 46. The first end surface 45 has a rectangular shape and substantially coincides with the bottoms 81 of the cartridges 80 located in the cassette 40. The second end surface 46 situated at the opening ends (82 in figure 6c and 7b) of the cartridges 80 preferably consists of two relative to each other inclined rectangular shaped subsurfaces 46.1, 46.2. At the cartridge bottoms 81 the end surface 45 is provided with openings 47 adapted to the cartridges 80 and recesses 48 for cooperation with the guide pins 18 in the cell 82 of the dispenser magazine. A recess 49 is located in the greatest side surface 41 of the cassette adjacent to the second end surface 46 in order to cooperate with the locking means 30 described in connection with the dispenser.

The more detailed shaping of the cassette and its manufacturing will be described further on.

The dispenser 10 (figure 1-3) is loaded by inserting dispensing cassettes 40 of the described kind into the dispenser magazine 11, a cassette 40 being arranged in each of the magazine cells 12 a-f. When loading it is ensured that the end surface 45 faces the respective cell bottom surface and that the greatest side surface 41 is directed obliquely upwards. When the cassette is inserted, the locking means 30 are so affected of the cassette 40 that its rotatable arm 31 turns away. When the cassette 40 approaches the bottom of the cell 12, the guide pins 18 engage with the recesses 48 in the first end surface of the cassette 40 and guide the cassette 40 into a correct position. At the same time the spring-loaded coupling means 20 disposed in the bottom of the cell 12 engage with the respective contact plates 83 of the cartridges 80 of the cassette 40. When the cassette has reached its bottom position the locking means 30 locks the cassette 40 by swinging the spring-loaded arm 31 into the recess 49 on the greates side surface 41 of the cassette.

When firing, the electronic firing control unit 13 of the dispenser is supplied with control signals coming from outside. In dependance of supplied control signals the electronic unit 13 distributes firing signals to igniters in the cartridges 80 in order to release a firing. The tapered section of the cassette 40, being motivated by aerodynamical reasons, is split at its second end surface 46 when the content of the cartridges is fired.

Empty cassettes 40 are removed from the magazine cell 12 by rotating the rotatable arm of the locking means 30 aside and the cassette 40 is pulled out and/or by means of its weight falls out of the cell. Thereafter it is possible to directly insert a new cassette 40 into the cell 12.

In the following description a first more detailed embodiment of the cassette 40 and its manufacture will be described with reference to figures 6 a-d. In figure 6a two metal elements 50, 51 are shown, the metal elements being shaped by means of punching from, for example, a metal plate followed by bending. In figure 6b a further metal element 52 shaped by means of punching is shown. The metal elements 50-52 are assembled by means of, for example, welding to constitute a frame 53 as apparent from figure 6c, which apart from the frame (retainer) shows two cartridges 80 disposed in the frame. Alternatively, the frame may be obtained by means of casting. As is apparent from figures 6 b-c, openings 48 for cooperation with guide pins and openings 47 for the cartridges 80 are provided in one end of the frame. Adjacent to the other end a metal plate 54 is fixed and adapted to cooperate with the locking means 30 of the dispenser. Figure 6c shows the cassette frame when loaded cartridges have been inserted into the frame. Figure 6d shows the cassette when the frame has been provided with a cover 55 for fixing the cartridges to the frame (retainer). Figure 6d discloses that the second end 46 of the frame 53 has been given a tapered shape. The tapered shape contributes to an aerodynamically advantageous shape. The shape may be obtained by giving the metal elements 50, 51 a tapering shape at the second end 46 already when punching. However, the tapering shape may be obtained entirely by means of the cover itself. Preferably the envelope consist of porous materials or homogenous plastic films. Covers of this kind show high shock absorbing ability and are due to that fact particularly suitable.

A second embodiment of a cassette and its manufacture will now be described with reference to figures 7a-7c. Figure 7a shows a cassette frame (retainer) 53 formed by means of punching and bending of a metal plate. Openings 47, 48 are punched for the cartridges 80 and the guide pins 18, respectively. Furthermore a recess 49 for cooperation with the locking means 30 is punched adjacent to the second end surface. Figure 7b shows the cassette frame after the insertion of cartridges. Figure 7c shows the cassette 40 when the frame 53 having cartridges 80 has been provided with a cover 55 for fixing of the cartridges to the frame.

In the specification above one embodiment of the dispenser and two embodiments of the cassette have been disclosed. However, a lot of variants are comprised within the scope of the invention as defined in the appended claims. For example, the locking means may be exchanged for other types and applied for engagement on another location of the cassette. Furthermore the guide pins and the recesses adapted thereto may be replaced with other types of guide means and means cooperating with the guide means.

## Claims

1. A dispenser (10) containing cassettes (40) for launching counter means, preferably intended for arrangement on the underside of an airplane wing, comprising a fixedly mounted dispenser body (15) with a space (12) adapted to accommodate a number of detachable dispensing cassettes (40) loaded with counter means, the cassettes being detachably mounted in the dispenser and locked to the dispenser by means of locking means (30), and an electronic firing control unit (13) for supplying firing signals to means for dispensing said counter means, said cassettes (40) containing containers (80) accommodating counter means of the cassettes and being provided with first means (48) for cooperation with guide means (18) of the dispenser (10) for guiding a cassette (40) in the final stage of its insertion into the adapted space (12) and ensuring a correct dispensing position of the same and electrical coupling between igniters for the containers and the electronic firing control unit (13), **characterized** in that the space adapted to accommodate the dispensing cassettes is devided into a number of cells (12) separated by partition walls (16), each cell defining an opening for insertion and removal of the cassettes, a cassette (40) when inserted being guided by the partition walls (16) to the final stage of its insertion, the locking means (30) are activated by the movement of the cassette (40) inwards during said final stage of insertion to lock the cassette (40) to the dispenser (10), the containers of the cassette are cartridges (80) kept in position by the cassette (40) and having bottoms provided with electrical contact surfaces (83) electrically connected to igniters of the cartridges (80) , each cartridge bottom contact surface being directly coupled to electrical coupling means in the dispenser (10) connecting the electronic firing control unit (13) with the contact surface (83) of the cartridge bottom.

2. A dispenser containing cassettes as claimed in claim 1, **characterized** in that the cells (12) of the dispenser (10) are inclined and have a launching direction obliquely downwards and backwards relative to the flight direction of the airplane on which the dispenser is mounted.

3. A dispensing cassette (40) containing cartridges (80) accomodating counter means intended to be used together with a dispenser as claimed in any of the preceeding claims, the cartridges being kept in position by the cassette, the cassette being provided with first means (48) for cooperation with guide means of a respective cell and second means (49) for cooperation with locking means, **characterized** in that the cartridges (80) are provided with contact surfaces (83) in the bottom for electrical connection of each contact surface in the cassette to electrical coupling means in the dispenser, the cartridges (80) being kept in position by a cartridge retainer (53) included in the dispensing cassette and keeping the bottoms (81) of the cartridges (80) uncovered and in an essentially common plane.

4. A dispensing cassette containing cartridges as claimed in claim 3, **characterized** in that the cartridges (80) in the retainer (53) are surrounded by a porous filling material.

5. A dispensing cassette containing cartridges as claimed in claim 3, **characterized** in that the cartridges (80) and the retainer (53) are enclosed by a cover consisting of a homogeneous plastic.

6. A dispening cassette containing cartridges as claimed in any of the claims 3-5, **characterized** in that said filling material or said cover has a tapering section (46) adapted to fit the contour of the dispenser body when inserted in dispensing position.

## Revendications

1. Distributeur (10) contenant des caissettes (40) destinées au lancement de leurres, de préférence destiné à être placé à la face inférieure d'une aile d'avion, comprenant un corps (15) de distributeur monté à demeure et ayant un espace (12) destiné à loger un certain nombre de caissettes amovibles (40) de distribution chargées de leurres, les caissettes étant montées de façon amovible sur le distributeur et étant bloquées sur le distributeur par un dispositif de blocage (30), et une unité électronique (13) de commande de tir destinée à transmettre des signaux de tir au dispositif de distribution des leurres, les caissettes (40) contenant des récipients (80) logeant des leurres des caissettes et étant munies d'un premier dispositif (48) destiné à coopérer avec un dispositif de guidage (18) du distributeur (10) destiné à guider une caissette (40) dans l'étape finale d'introduction dans l'espace adapté (12) et assurant une position convenable de distribution de celle-ci et un couplage électrique entre les allumeurs des récipients et l'unité électronique de commande de tir (13), caractérisé en ce que l'espace adapté au logement des caissettes de distribution est divisé en un certain nombre de cellules (12) séparées par des parois de séparation (16), chaque cellule délimitant une ouverture destinée à l'introduction et à l'extraction des caissettes, une caissette (40), lorsqu'elle est introduite, étant guidée par les parois (16) de séparation vers l'étape finale d'introduction, le dispositif de blocage (30) est activé par déplacement de la caissette (40) vers l'intérieur pendant l'étape finale d'introduction afin que la caissette (40) soit bloquée sur le distributeur (10), les récipients de la caissette sont des cartouches (80) maintenues en position par la caissette (40) et ayant des parties inférieures munies de surfaces (83) de contact électrique qui sont connectées électriquement aux allumeurs des cartouches (80), chaque surface inférieure de contact de cartouche étant directement couplée au dispositif de couplage électrique placé dans le distributeur (10) et connectant l'unité électronique de commande de tir (13) à la surface de contact (83) de la partie inférieure de la cartouche.

2. Distributeur contenant des caissettes selon la revendication 1, caractérisé en ce que les cellules (12) du distributeur (10) sont inclinées et ont une direction de lancement dirigée obliquement vers le bas et vers l'arrière par rapport à la direction de vol de l'avion sur lequel est monté le distributeur.

3. Caissette (40) de distribution contenant des cartouches (80) logeant des leurres, destinée à être utilisée avec un distributeur selon l'une quelconque des revendications précédentes, les cartouches étant maintenues en position par la caissette, la caissette étant munie d'un premier dispositif (48) destiné à coopérer avec un dispositif de guidage d'une cellule respective et un second dispositif (49) destiné à coopérer avec le dispositif de blocage, caractérisée en ce que les cartouches (80) ont des surfaces de contact (83) placées à la partie inférieure et destinées à assurer la connexion électrique de chaque surface de contact de la caissette avec le dispositif de couplage électrique placé dans le distributeur, les cartouches (80) étant maintenues en position par un organe (53) de retenue de cartouches incorporé à la caissette de distribution et maintenant les parties inférieures (81) des cartouches (80) sous forme découverte et pratiquement dans un même plan commun.

4. Caissette de distribution contenant des cartouches selon la revendication 3, caractérisée en ce que les cartouches (80) placées dans l'organe de retenue (53) sont entourées par un matériau poreux de remplissage.

5. Caissette de distribution contenant des cartouches selon la revendication 3, caractérisée en ce que les cartouches (80) et l'organe de retenue (53) sont enfermés par un couvercle constitué d'une matière plastique homogène.

6. Caissette de distribution contenant des cartouches selon l'une quelconque des revendications 3 à 5, caractérisée en ce que le matériau de remplissage ou le couvercle a un tronçon (46) de dimension variant progressivement et destiné à se loger sur le contour du corps du distributeur lorsqu'il est introduit en position de distribution.

**Patentansprüche**

1. Verteilvorrichtung (10) mit Kassetten (40) zum Ausstoßen von Störmitteln, vorzugsweise zum Anordnen an der Unterseite eines Flugzeugflügels bestimmt, mit einem fest montierten Verteilergehäuse (15) mit einem Raum (12) zur Aufnahme einer Anzahl herausnehmbarer Verteilerkassetten, die mit Störmitteln beladen sind, wobei die Kassetten herausnehmbar in der Verteilvorrichtung befestigt und durch eine Sperreinrichtung (30) an der Verteilvorrichtung verriegelt sind, und einer elektrischen Abschußsteuereinheit zum Zuführen von Auslösesignalen an Mittel zum Verteilen der Störmittel, wobei die Kassetten (40) Behälter (80), die die Störmittel der Kassetten aufnehmen, enthalten und mit ersten Mitteln (48) zum Zusammenwirken mit Führungsmitteln (18) der Verteilvorrichtung (10) für das Führen einer Kassette (40) im Endstadium ihrer Einführung in den angepaßten Raum (12) und für das Sicherstellen einer korrekten Verteilerstellung derselben und der elektrischen Kopplung zwischen den Zündern für die Behälter und der elektronischen Abschußsteuereinheit (13), versehen sind, dadurch **gekennzeichnet,** daß der zur Aufnahme der Verteilerkassetten angepaßte Raum in eine Anzahl von Zellen (12) unterteilt ist, die durch Trennwände (16) getrennt sind, wobei jede Zelle eine Öffnung zum Einführen und Entfernen der Kassetten festlegt, wobei eine Kassette (40) beim Einführen durch die Trennwände (16) bis zum Endstadium des Einführens geführt wird, daß die Sperreinrichtung (30) durch die Hineinbewegung der Kassette (40) während des Endstadiums des Einführens aktiviert wird, um die Kasette (40) in der Verteilvorrichtung zu verriegeln, und daß die Behälter der Kassetten Patronen (80) sind, die durch die Kassetten (40) in Position gehalten werden und Bodenteile aufweisen, die mit elektrischen Kontaktflächen (83) versehen sind, die elektrisch mit den Zündern der Patronen (80) verbunden sind, wobei jede Bodenteilkontaktfläche einer Patrone direkt mit elektrischen Kopplungsmitteln in der Verteilvorrichtung (10) gekoppelt ist, die die elektronische Abschußsteuereinheit (13) mit der Kontaktfläche (83) des Patronenbodenteils verbindet.

2. Verteilvorrichtung mit Kassette nach Anspruch 1, dadurch **gekennzeichnet,** daß die Zellen (12) der Verteilvorrichtung (10) geneigt sind und eine Ausstoßrichtung schräg nach unten und hinten gerichtet aufweisen relativ zur Flugrichtung des Flugzeuges, an dem die Verteilvorrichtung befestigt ist.

3. Verteilerkassette (40) mit Patronen (80), die Störmittel aufnehmen, welche zur Verwendung zusammen mit einer Verteilvorrichtung gemäß den vorangehenden Ansprüchen bestimmt sind, wobei die Patronen durch die Kassette in Position gehalten werden und die Kassette mit ersten Mitteln (48) zum Zusammenwirken mit Führungsmitteln der jeweiligen Zelle, und zweiten Mitteln (49) zum Zusammenwirken mit einer Sperreinrichtung versehen ist, dadurch **gekennzeichnet,** daß die Patronen (80) mit Kontaktflächen (83) im Bodenteil zum elektrischen Verbinden jeder Kontaktfläche in der Kassette mit elektrischen Kopplungsmitteln in der Verteilvorrichtung versehen sind, und daß die Patronen (80) durch einen Patronenhalter (53) in Position gehalten werden, der in der Verteilerkassette enthalten ist und der die Bodenteile (81) der Patronen (80) unbedeckt und in einer im wesentlichen gemeinsamen Ebene hält.

4. Verteilerkassette mit Patronen nach Anspruch 1, dadurch **gekennzeichnet,** daß die Patronen (80) im Halter (53) von einem porösen Füllmaterial umgeben sind.

5. Verteilerkassette mit Patronen nach Anspruch 3, dadurch **gekennzeichnet,** daß die Patronen (80) und der Halter (53) von einer Hülle aus einem homogenen Kunststoff umgeben sind.

6. Verteilerkassette mit Patronen nach den Ansprüchen 3 bis 5, dadurch **gekennzeichnet,** daß das Füllmaterial oder die Hülle einen verjüngten Abschnitt (46) aufweist, der an die Kontur des Verteilergehäuses, wenn dieser in die Verteilerposition eingesetzt ist, angepaßt ist.

# Fig.1

# Fig.2

# Fig.3

Fig. 4

16
34
30
31
33
32

Fig. 5

40
41
49
44
48
46,1
46
46,2
45
55
81,83
42
47
48
43

Fig. 6a

51
50

Fig. 6b

48    48
      47
      52
47

Fig. 6c

54
51    82
48    80
      53
47 52  48 50
81,83

Fig. 6d

49
55    46
48    40
47  51 52 50 81,83  48

10

*Fig. 7a*

48
47
53
49

*Fig. 7b*

48
53
80
82
49

*Fig. 7c*

43
42
46,2
55
46,1
40
41
44
49